# EUROPEAN PATENT SPECIFICATION

(11) **EP 2 677 621 B1**
(45) Date of publication and mention of the grant of the patent: **27.11.2019**
(21) Application number: 12305695.4
(22) Date of filing: 19.06.2012
(51) Int. Cl.: B60L 7/12, B60L 9/08, H02J 3/18, H02M 7/797

(54) **AC-DC single phase controlled reversible converter with low loss snubber**
Einphasengesteuerter, umkehrbarer Wechselstrom-Gleichstrom-Wandler mit Snubber mit geringen Verlusten
Convertisseur CA-CC réversible à contrôle de phase simple avec circuit d'amortisseur à faibles pertes

(43) Date of publication of application: 25.12.2013
(73) Proprietor: ALSTOM Transport Technologies, 93400 Saint-Ouen (FR)
(72) Inventor: Borup, Michael, CHESHIRE, SK9 4AE (GB); Greening, Jonathan, PRESTON, PR1 9DR (GB); Lumley, Martin, SOUTHPORT, PR8 4TJ (GB)
(74) Representative: Lavoix

(56) References cited:
- WO-A1-2011/116816
- US-A- 6 163 472
- US-A1- 2003 231 517

## Description

The present invention relates to an AC-DC single phase controlled reversible converter with a low loss snubber and energy recovery circuit to be connected, on one side, to a DC motor of a railway vehicle, and, on the other side, to a secondary of a transformer whose primary is connected to a high voltage AC supply. The converter is thus at the interface between an highly inductive source and an highly inductive load.

An AC-DC single phase controlled reversible converter is capable of operating as a rectifier, to transfer power from the AC side to the DC side when the DC motor is in a traction mode, or as an inverter to transfer power from the DC side to the AC side when the DC motor is in a regenerative braking mode.

AC-DC single phase controlled rectifiers are known which comprise controlled bridges for feeding DC motors from AC supplies.

The simplest of such controlled bridges is an half controlled bridge using thyristors (otherwise known as silicon controlled rectifiers or SCRs) in two arms of the bridge and two diodes in the other two arms of the bridge.

But this type of controlled bridge suffers from low power factor and can only work for motoring mode of the DC motor. The low power factor of the bridge is caused by the asymmetric conduction period relative to the applied AC voltage. This asymmetry is caused by the inability of the thyristor to interrupt the current before the natural end of the conduction cycle.

Very few schemes provide control of the bridge to enable it to work also as an inverter during regenerative braking mode of the DC motor. But these schemes suffer from low power factor and restricted operating range in regenerative mode. As an alternative solution to these existing AC-DC single phase controlled converter, it is now preferred to use an AC motor with an AC-DC single phase controlled converter working at a high frequency. The motor is then supplied by a DC to 3-phase AC inverter.

US 6 163 472 A discloses a bidirectional converter for supplying a DC motor from a 3-phase supply and vice versa.

An aim of the invention is to propose a low loss snubber and energy recovery circuit applied to an AC-DC single phase controlled converter that enables the converter to work with a highly inductive supply and/or load without incurring excessive electrical losses., also having a high power factor and also providing the full operating range in regenerative braking mode allowed by the traction motor.

To this end, the invention provides a converter and a railway vehicle according to the claims.

The invention and its advantages will be better understood on reading the following description given solely by way of example and with reference to the appended drawings in which:
- Figure 1 is a schematic wiring scheme of the circuit of the AC-DC single phase controlled converter; and
- Figures 2 and 3 illustrate the operation of the converter of figure 1, respectively in a traction mode and regenerative braking mode.

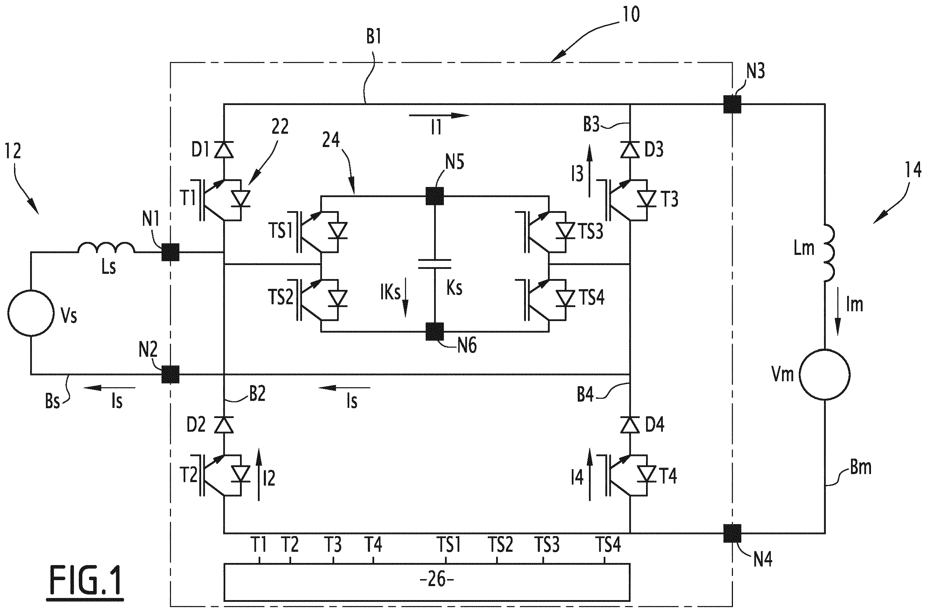

The AC-DC single phase controlled converter 10 is schematically represented in figure 1.

The converter 10 is a four pole device having two AC input terminals N1 and N2 and two DC output terminals N3 and N4.

The converter 10 is at the interface between a secondary winding 12 of a transformer and a DC motor 14 of a railway vehicle. Converter 10 can operate alternatively in a traction mode, where power is transferred from the transformer secondary winding 12 to the DC motor 14, or in a regenerative braking mode, where power is transferred from the DC motor to the transformer secondary winding 12.

The transformer secondary winding 12 is connected between the two AC terminals N1 and N2 of the circuit 10. The transformer secondary winding 12 is, from the circuit 10, equivalent to a source of voltage Vs connected in series with an impedance of the inductance type, Ls.

The DC motor 14 is connected between the two DC output terminals N3 and N4 of the circuit 10. The DC motor 14 is, from the circuit 10, equivalent to a source of voltage Vm, corresponding to the motor armature voltage, in series with an impedance of the inductive type, Lm, corresponding to the sum of the traction motor inductance and the smoothing inductance.

The circuit comprises two bridges: a main bridge 22 and a snubber bridge 24.

The main bridge 22 is a single phase fully controlled bridge comprising four nodes and four branches.

Each branch Bi of the main bridge 22 comprises a controlled power semiconductor device Ti in series with an uncontrolled power semiconductor electronic device Di.

The device Ti comprises a non regenerative controlled semiconductor device such an IGBT connected in parallel with a uncontrolled semiconductor device of the rectifier type such as a diode. More precisely, the anode of the diode is connected to the emitter of the IGBT and the cathode of the diode is connected to the collector of the IGBT. Each device Ti will be considered as a single element throughout the present document.

The uncontrolled power semiconductor electronic device Di is of the rectifier type such as a diode. The anode of device Di is connected at the emitter of the associated device Ti.

This structure of the main bridge 22 is similar to a half controlled bridge where the two thyristors and the two diodes are each replaced by an IGBT and a diode. Forced commutation of the IGBTs allows the conduction period within each half cycle to be optimised for improving the power factor

Device T1 and device D1 are connected so that the collector of the device T1 is linked to terminal N1 and cathode of device D1 is linked to terminal N3. Device T2 and diode D2 are connected so that the collector of the device T2 is linked to terminal N4 and the cathode of device D2 is linked to terminal N1.
Device T3 and diode D3 are connected so that the collector of the device T3 is linked to terminal N2 and the cathode of device D3 is linked to terminal N3.
Device T4 and diode D4 are connected so that the collector of the device T4 is linked to terminal N4 and the cathode of device D4 is linked to terminal N2.

The snubber bridge 24 has two pairs of opposite nodes.

The unmarked nodes of the first pair are respectively connected to the AC input terminals N1 and N2 of the converter 10. The snubber bridge 24 is thus connected in parallel to the secondary 12.

The second pair of nodes comprises nodes N5 and N6.

A snubber capacitor Ks connects nodes N5 to node N6.

Each branch Bsi of the four branches of the snubber bridge 24 comprises a controlled power semiconductor device Tsi.

The device Tsi comprises a non regenerative controlled semiconductor device such an IGBT connected in parallel with an uncontrolled semiconductor device of the rectifier type such as a diode. More precisely, the anode of the diode is connected to the emitter of the IGBT and the cathode of the diode is connected to the collector of the IGBT. Each device Tsi will be considered as a single element throughout the present document.

Device Ts1 is connected so that its collector is connected to terminal N1 and its emitter, to terminal N5.

Device Ts2 is connected so that its collector to terminal N6 and its emitter, to terminal N1.

Device Ts3 is connected so that its collector to terminal N2 and its emitter, to terminal N5.

Device Ts4 is connected so that its collector to terminal N6 and its emitter, to terminal N2.

Finally, the converter 10 comprises a control unit 26 schematically shown in figure 1. This control unit 26 is capable to switch on or off any device among the devices Ti of the main bridge 22 and TSi of the snubber bridge 24, by applying an adapted control signal on its gate.

### Converter operation in traction mode

The operation of converter 10 in traction mode is very similar to that of a conventional AC-DC single phase half controlled rectifier, except that the current Is in the secondary branch Bs is forced commutated off, instead of relying on natural commutation.

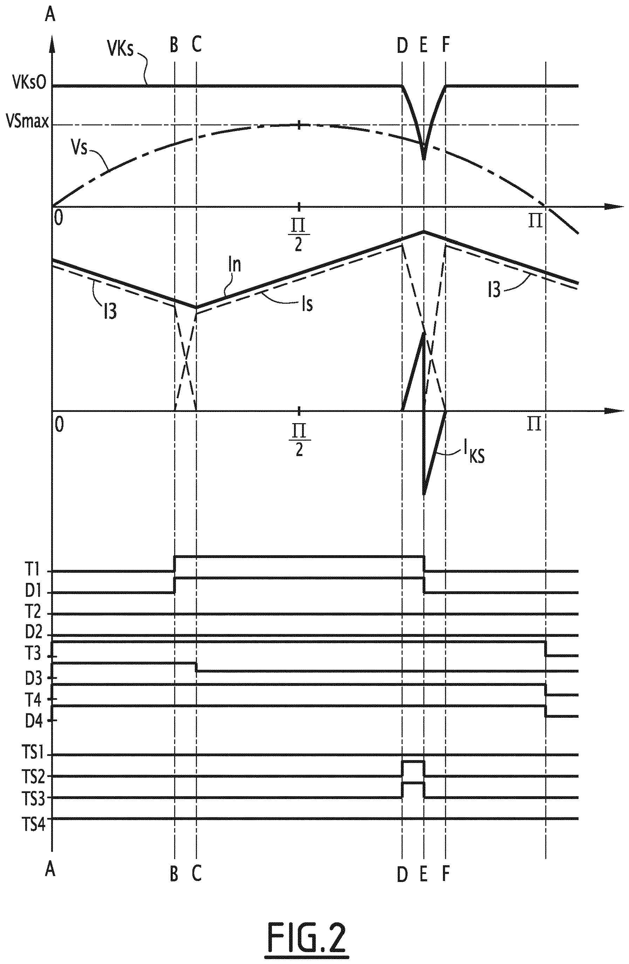

In traction mode, devices T3 and T4 of the main bridge are permanently turned on as illustrated on the corresponding graphs of figure2. A motor circuit freewheel path is thus established along motor branch Bm and branches B4 and B3 of the main bridge 22.

Instant A corresponds to the beginning of the positive half period of transformer secondary winding voltage Vs.

Between instant A and instant B, where device T1 will be turned on, the motor current Is falls linearly as the electrical energy circulated in the freewheel path is converted into mechanical energy by the DC motor 14.

Through previous operation cycle of converter 10, the capacitor Ks is charged to a voltage VKs0 in excess of the peak voltage Vsmax of the transformer secondary voltage Vs.

The output voltage across output terminals N3 and N4 is low. It amounts to the sum of the forward voltage drops of the devices T4, D4, T3 and D3.

At point B, device T1 of the main bridge 22 is turned on.

When device T1 is turned on, motor current Im is the sum of the transformer secondary current Is and current I3 in the third branch B3.

The transformer secondary current Is in the branch Bs increases at a rate determined by Vs and Ls.

At the beginning, motor current Im is unaffected since the voltage across T3 and D3 remains low. This situation persists until the current I3 in the third branch B3 has fallen to zero (point C in figure 2). Then the diode D3 becomes reverse biased and the freewheel path is interrupted.

At point C, the motor current Im follows secondary current Is. It starts to increase at a rate determined by the difference between the motor voltage Vm and the transformer secondary voltage Vs and the sum of the transformer secondary inductance Ls and the motor inductance Lm.

The motor current Im continues to increase until the end of the conduction period defined by point E in figure 2 where device T1 of the first branch of the main bridge 22 is switched off.

When the transformer secondary current Is is interrupted it is necessary to manage the stored energy in the transformer secondary winding 12 so that excessive switching voltages are suppressed.

For this purpose, at a point D before point E, devices TS2 and TS3 of the snubber bridge 24 are turned on, at the same time.

Because the voltage across capacitor KS exceeds the peak voltage Vsmax of the transformer secondary voltage Vs, when devices TS2 and TS3 are turned on, capacitor KS starts to discharge both into the motor branch Bm (through branch B1 of the main bridge 22) and the secondary branch Bs.

The motor current Im is then the sum of the corresponding discharge current IKs and the transformer secondary current Is.

The discharge current IKs increases at a rate determined by the difference between the capacitor voltage VKs and the instantaneous transformer secondary voltage Vs and the transformer secondary inductance Ls. It is assumed that the motor inductance Lm is much greater than the transformer secondary inductance Ls and can be ignored for the purpose of this description.

Because the motor current Im is essentially constant over the short term, the increase in current IKs is accompanied by a corresponding decrease in the current Is in the transformer secondary.

This discharge current IKs is allowed to increase until it is approximately equal to half the motor current Im. The time between point D and point E is chosen so that this happens at point E.

At point E, device T1 of the main bridge 22 is turned off. This is the end of the conduction period.

When device T1 is turned off, the motor current Im is commutated into the freewheel path, diode D3 being no more reversed biased.

When device T1 is turned off, the transformer secondary current Is must continue to flow. The path that is available is through the capacitor KS. The capacitor current IKs is then reversed and the capacitor voltage VKs across KS increases. The current path into capacitor KS is via the anti parallel diodes incorporated within devices TS2 and TS3 of the snubber bridge 24. Devices TS2 and TS3 are thus commutated off naturally, by current reversal and the use of their anti parallel diodes.

The transformer secondary current Is continues to decrease at a rate determined by the difference between the capacitor voltage Vks and the instantaneous transformer secondary voltage Vs and the transformer secondary inductance Ls.

Because devices TS2 and TS3 of the snubber bridge 24 are turned off, the circuit will not ring and the current Is in the transformer secondary will simply fall to zero (point F in figure 2), leaving the capacitor voltage Vks at the same level as before devices TS2 and TS3 were turned on, i.e. at VKs0.

The converter 10 is now returned to its state as at the beginning of the positive half cycle (point A).

The negative half cycle follows the same pattern but using, in the main bridge 22, device T2 instead of device T1 to apply transformer secondary voltage Vs to the motor branch and, in the snubber bridge, devices TS1 and TS4 instead of devices TS2 and TS3 for the turn off process.

### Converter operation in regenerative braking mode.

In regenerative braking, the traction motor circuit is reconfigured so that the braking current builds up in the same direction as in the traction mode.

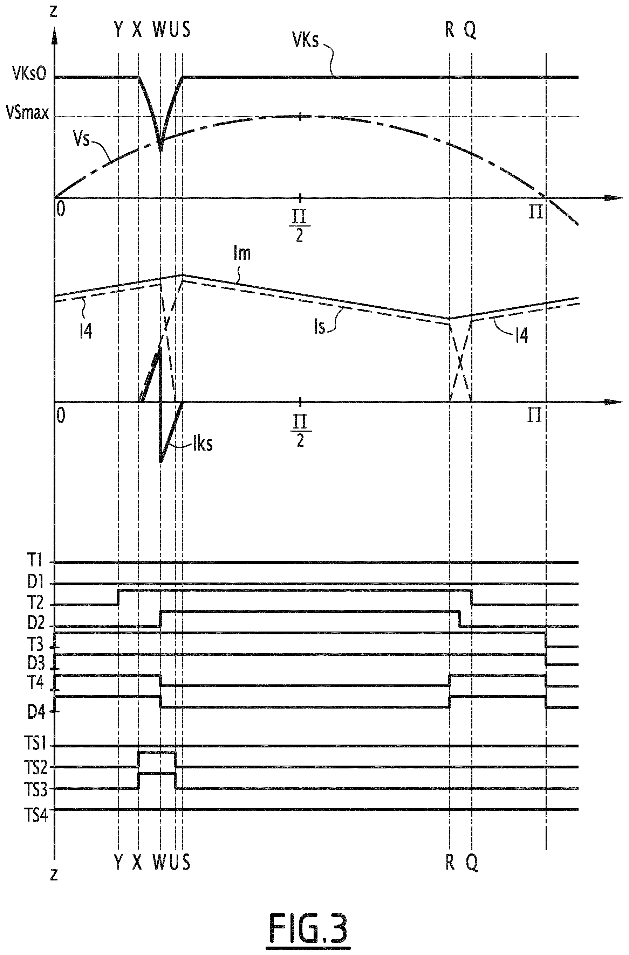

In regenerative braking mode, devices T3 and T4 of the main bridge 22 are used actively as illustrated on the corresponding graphs of figure 3.

Point Z corresponds to the beginning of the positive half period of transformer secondary voltage Vs.

At point Z, devices T1 and T2 are off and T3 and T4 are on. Thus, the motor current Im increases as the mechanical energy arising from deceleration of the railway vehicle is converted into electrical energy by the traction motor.

Through previous circuit operation, the capacitor Ks is charged to a voltage Vks0 in excess of the peak voltage Vsmax of the transformer secondary voltage Vs.

The voltage across the output terminals is low. It amounts to the sum of the forward voltage drops of devices T4, D4, T3 and D3 that form the freewheel path.

The motor current Is in the freewheel path can only be interrupted by turning off either device T3 or device T4 of the main bridge 22.

As illustrated in Figure 3, at point W of the cycle, it will be chosen to turn off device T4.

Before this occurs, a path must be established to allow the motor current Im to continue flowing and the purpose of the circuit is to force the motor current Im to flow into the transformer winding, i.e. in the transformer secondary branch Bs.

At point Y, just before device T4 is turned off, device T2 of the main bridge 22 is turned on. At this point in the cycle the instantaneous transformer secondary voltage Vs value means that diode D2 in branch B2 of the main bridge 22 is reverse biased and no current I2 flows through this second branch B2, i.e. through device T2.

The motor current Im continues to increase.

At this point it is necessary to interrupt the motor current Im ensuring that the stored energy in the motor circuit is managed so that excessive switching voltages are suppressed.

To this purpose, the first step consists in turning on devices TS2 and TS3 of the snubber bridge at point X.

Because the voltage VKs across capacitor Ks exceeds the peak voltage Vsmax of the transformer secondary voltage Vs, when devices TS2 and TS3 are turned on, capacitor KS starts to discharge into the transformer secondary branch Bs.

The corresponding discharge current IKs increases at a rate determined by the difference between the voltage VKs and the instantaneous transformer secondary voltage Vs and the transformer secondary inductance Ls.

The discharge current IKs is allowed to increase until the current in the capacitor IKs and transformer secondary Is are approximately equal to half the motor current Im.

This corresponds to point W in figure 3.

At the same time, the second step consists in turning off device T4.

The capacitor current IKs is then reversed and the motor current Is splits approximately equally between the path through capacitor Ks and the path through the transformer secondary (branch Bs).

The capacitor current IKs decreases as the transformer secondary current Is increases until, at point S, the secondary current Is equals the motor current Im and the capacitor current IKs reaches zero.

Providing that devices TS2 and TS3 of the snubber bridge 24 are turned off at point U between points W and S, the circuit will not ring and the current in the capacitor Ks will simply fall to zero, leaving the voltage VKs at the same level (i.e. equal to VKs0) as before devices TS2 and TS3 were turned on.

Note that devices TS2 and TS3 of the snubber bridge 24 are commutated off naturally by current reversal and the use of their anti parallel diodes.

The motor current Im decreases during the transformer conduction period, after point W, as the stored energy in the motor circuit is transferred to the supply.

The turning on of device T4 of the main bridge ends the conduction period (point R).

When device T4 is turned on, the motor current Is is commutated into the freewheel path. But, initially, transformer secondary current Is must continue to flow.

The transformer secondary current Is decreases at a rate determined by the instantaneous transformer secondary voltage Vs and the transformer secondary inductance Ls. As the transformer secondary current Is decreases the current I4 through the fourth branch of the main bridge 22 increases until transformer secondary current Is reaches zero (point Q).

The circuit is now in the same condition as at the start of the half cycle (point Z).

The second half of the cycle is a repeat of the first but using devices T1 and T3 of the main bridge 22 instead of devices T1 and T4 and devices TS1 and TS4 of the snubber bridge instead of devices TS2 and TS3.

The converter described above provides four quadrant control of a DC traction motor of a railway vehicle such a train, a tramway or the like.

Forced commutation of the main bridge enables a high power factor to be maintained both in traction mode and in regenerative braking mode due to the energy recovery snubber bridge that assures low overall losses. More precisely, large currents in the transformer secondary winding are first transferred to a snubber capacitor and then released form the snubber capacitor to either the DC motor or the transformer secondary winding at a suitable point in the AC voltage cycle, this suitable point depending whether the converter actually works as a rectifier or an inverter.

It is to be noted that the snubbing action of the snubber bridge of the converter is passive. The energy recovery action of the snubber bridge is active.

## Claims

1. AC-DC single phase reversible converter with low loss snubber having a pair of entrance terminals (N1, N2) intended to be connected to a secondary of a transformer whose primary is connected to a high voltage AC supply, and a pair of output terminals (N3, N4) intended to be connected to a DC motor of a railway vehicle, said converter comprising a main bridge and a control unit (26), **characterised in that**
- said main bridge (22) is a force commutated fully controlled bridge having a first pair of opposite terminals connected to the entrance terminals of the converter and a second pair of opposite terminals connected to the output terminals of the converters, each branch (Bi) of the controlled bridge comprising a controlled power semiconductor device (Ti) in series with an uncontrolled power semiconductor electronic device (Di);
- said main bridge (22) is configured to transmit a power to the DC motor when said DC motor is in a traction mode and transmit a power to the secondary of the transformer when said DC motor is in a regenerative braking mode, with the same direction of current flow in the DC motor in both modes due to a reconfiguration of the converter by the control unit (26);
- the converter further comprises a snubber bridge (24) comprising a first pair of opposite terminals (N5, N6) connected to the entrance terminal of the converter and a second pair of opposite terminals connected together by means of a capacitor (Ks), each branch of the snubber bridge comprising a controlled power semiconductor device (Tsi); and
- said controlled power semiconductor devices (Ti; Tsi) are configured to be switched on or off by the control unit so that said capacitor stores energy from the secondary and releases said energy to the motor at the end of the conductive period in traction mode or to the secondary at the beginning of the conductive period in a regenerative braking mode.

2. AC-DC single phase reversible converter according to claim 1, **characterised in that** each controlled power semiconductor device (Ti) of the main bridge comprises a non regenerative controlled semiconductor device, preferably an IGBT, connected in parallel with a uncontrolled semiconductor device of the rectifier type, preferably a diode.

3. AC-DC single phase reversible converter according to claim 1 or claim 2, **characterised in that** each uncontrolled power semiconductor electronic device (Di) of the main bridge is of the rectifier type, preferably a diode.

4. AC-DC single phase reversible converter according to any one of claims 1 to 3, **characterised in that** each controlled power semiconductor device (Tsi) of the snubber bridge comprises a non regenerative controlled semiconductor device, preferably an IGBT, connected in parallel with an uncontrolled semiconductor device of the rectifier type, preferably a diode.

5. AC-DC single phase reversible converter according to any one of claims 1 to 3, **characterised in that** the snubber bridge is passive in snubbing mode and active in energy recovery mode.

6. Railway vehicle comprising a transformer, an AC-DC single phase reversible converter and at least one DC motor, said converter being connected between a secondary of the transformer, whose primary is intended to be connected to an AC supply, and the DC motor, wherein said converter is a converter according to any one of claims 1 to 5.

## Patentansprüche

1. AC-DC-Einphasen-Umkehrwandler mit verlustarmen Dämpfer, aufweisend ein Paar von Eingangsanschlüssen (N1, N2), die dazu gedacht sind, mit einer Sekundärseite eines Transformators, dessen Primärseite mit einer Hochspannungs-AC-Versorgung verbunden ist, verbunden zu sein, und ein Paar von Ausgangsanschlüssen (N3, N4), die dazu gedacht sind, mit einem DC-Motor eines Schienenfahrzeugs verbunden zu sein, wobei der Wandler eine Hauptbrücke und eine Steuereinheit (26) aufweist, **gekennzeichnet dadurch, dass**
- die Hauptbrücke (22) eine zwangskommutierte gesteuerte Vollbrücke ist, welche ein erstes Paar von entgegengesetzten Anschlüssen, die mit den Eingangsanschlüssen des Wandlers verbunden sind, und ein zweites Paar von entgegengesetzten Anschlüssen, die mit den Ausgangsanschlüssen des Wandlers verbunden sind, aufweist, wobei jeder Zweig (Bi) der gesteuerten Brücke eine gesteuerte Leistungshalbleitereinrichtung (Ti) in Reihe mit einer ungesteuerten Leistungshalbleiterelektronikeinrichtung (Di) aufweist,
- wobei die Hauptbrücke (22) dazu eingerichtet ist, eine Leistung an den DC-Motor zu übertragen, wenn der DC-Motor in einem Traktionsmodus ist, und eine Leistung an die Sekundärseite des Transformators zu übertragen, wenn der DC-Motor in einem Regeneratives-Bremsen-Modus ist, mit der gleichen Stromflussrichtung in dem DC-Motor bei beiden Modi aufgrund einer Neukonfiguration des Wandlers durch die Steuereinheit (26),
- der Wandler ferner eine Dämpferbrücke (24) aufweist, welche ein erstes Paar von entgegengesetzten Anschlüssen (N5, N6), die mit den Eingangsanschlüssen des Wandlers verbunden sind, und ein zweites Paar von entgegengesetzten Anschlüssen, die miteinander durch einen Kondensator (Ks) verbunden sind, aufweist, wobei jeder Zweig der Dämpferbrücke eine gesteuerte Leistungshalbleitereinrichtung (Tsi) aufweist, und
- die gesteuerten Leistungshalbleitereinrichtungen (Ti; Tsi) dazu eingerichtet sind, eingeschaltet oder ausgeschaltet zu werden durch die Steuereinheit, so dass der Kondensator Energie von der Sekundärseite speichert und besagte Energie an den Motor zum Ende der konduktiven Periode im Traktionsmodus oder an die Sekundärseite zum Beginn der leitenden Periode in einem Regeneratives-Bremsen-Modus freisetzt.

2. AC-DC-Einphasen-Umkehrwandler gemäß Anspruch 1, **gekennzeichnet dadurch, dass** jede gesteuerte Leistungshalbleitereinrichtung (Ti) der Hauptbrücke eine nichtregenerierende gesteuerte Halbleitereinrichtung, bevorzugt einen IGBT, aufweist, die parallel zu einer ungesteuerten Halbleitereinrichtung vom Gleichrichter-Typ, bevorzugt einer Diode, geschaltet ist.

3. AC-DC-Einphasen-Umkehrwandler gemäß Anspruch 1 oder 2, **gekennzeichnet dadurch, dass** jede ungesteuerte Leistungshalbleiterelektronikeinrichtung (Di) der Hauptbrücke vom Gleichrichter-Typ ist, bevorzugt eine Diode.

4. AC-DC-Einphasen-Umkehrwandler gemäß irgendeinem der Ansprüche 1 bis 3, **gekennzeichnet dadurch, dass** jede gesteuerte Leistungshalbleitereinrichtung (Tsi) der Dämpferbrücke eine nichtregenerierende gesteuerte Halbleitereinrichtung, bevorzugt einen IGBT, aufweist, die parallel zu einer ungesteuerten Halbleitereinrichtung vom Gleichrichter-Typ, bevorzugt einer Diode, geschaltet ist.

5. AC-DC-Einphasen-Umkehrwandler gemäß irgendeinem der Ansprüche 1 bis 3, **gekennzeichnet dadurch, dass** die Dämpferbrücke im Dämpfungsmodus passiv ist und im Energierückgewinnungsmodus aktiv ist.

6. Schienenfahrzeug, aufweisend einen Transformator, einen AC-DC-Einphasen-Umkehrwandler und mindestens einen DC-Motor, wobei der Wandler zwischen einer Sekundärseite des Transformators, dessen Primärseite dazu gedacht ist, mit einer AC-Versorgung verbunden zu sein, und dem DC-Motor angeschlossen ist, wobei der Wandler ein Wandler gemäß irgendeinem von Ansprüchen 1 bis 5 ist.

## Revendications

1. Convertisseur réversible monophasé alternatif-continu avec un circuit de protection à faibles pertes ayant une paire de bornes d'entrée (N1, N2) destinées à être connectées à un secondaire d'un transformateur dont le primaire est connecté à une alimentation en courant alternatif haute tension, et une paire de bornes de sortie (N3, N4) destinées à être connectées à un moteur à courant continu d'un véhicule de chemin de fer, ledit convertisseur comprenant un pont principal et une unité de commande (26), **caractérisé en ce que**
- ledit pont principal (22) est un pont totalement commandé commuté de force ayant une première paire de bornes opposées connectées aux bornes d'entrée du convertisseur et une deuxième paire de bornes opposées connectées aux bornes de sortie du convertisseur, chaque branche (Bi) du pont commandé comprenant un dispositif à semi-conducteurs de puissance commandé (Ti) en série avec un dispositif électronique à semi-conducteurs de puissance non commandé (Di) ;
- ledit pont principal (22) est configuré pour transmettre une puissance au moteur à courant continu lorsque ledit moteur à courant continu est dans un mode de traction et transmettre une puissance au secondaire du transformateur lorsque ledit moteur à courant continu est dans un mode de freinage à régénération, avec la même direction de circulation de courant dans le moteur à courant continu dans les deux modes du fait d'une reconfiguration du convertisseur par l'unité de commande (26) ;
- le convertisseur comprend en outre un pont de circuit de protection (24) comprenant une première paire de bornes (N5, N6) opposées connectées à la borne d'entrée du convertisseur et une deuxième paire de bornes opposées connectées l'une à l'autre au moyen d'un condensateur (Ks), chaque branche du pont de circuit de protection comprenant un dispositif à semi-conducteurs de puissance commandé (Tsi) ; et
- lesdits dispositifs à semi-conducteurs de puissance commandés (Ti ; Tsi) sont configurés pour être activés ou désactivés par l'unité de commande de sorte que ledit condensateur stocke l'énergie provenant du secondaire et libère ladite énergie vers le moteur à la fin de la période de conduction dans le mode de traction ou vers le secondaire au début de la période de conduction dans un mode de freinage à régénération.

2. Convertisseur réversible monophasé alternatif-continu selon la revendication 1, **caractérisé en ce que** chaque dispositif à semi-conducteurs de puissance commandé (Ti) du pont principal comprend un dispositif à semi-conducteurs commandé non à régénération, de préférence un IGBT, connecté en parallèle avec un dispositif à semi-conducteurs non commandé du type redresseur, de préférence une diode.

3. Convertisseur réversible monophasé alternatif-continu selon la revendication 1 ou la revendication 2, **caractérisé en ce que** chaque dispositif électronique à semi-conducteurs de puissance non commandé (Di) du pont principal est du type redresseur, de préférence une diode.

4. Convertisseur réversible monophasé alternatif-continu selon l'une quelconque des revendications 1 à 3, **caractérisé en ce que** chaque dispositif à semi-conducteurs de puissance commandé (Tsi) du pont de circuit de protection comprend un dispositif à semi-conducteurs commandé non à régénération, de préférence un IGBT, connecté en parallèle avec un dispositif à semi-conducteurs non commandé du type redresseur, de préférence une diode.

5. Convertisseur réversible monophasé alternatif-continu selon l'une quelconque des revendications 1 à 3, **caractérisé en ce que** le pont de circuit de protection est passif dans le mode de protection et actif dans le mode de récupération d'énergie.

6. Véhicule de chemin de fer comprenant un transformateur, un convertisseur réversible monophasé alternatif-continu et au moins un moteur à courant continu, ledit convertisseur étant connecté entre un secondaire du transformateur, dont le primaire est destiné à être connecté à une alimentation en courant alternatif, et le moteur à courant continu, dans lequel ledit convertisseur est un convertisseur selon l'une quelconque des revendications 1 à 5.
